(19) Europäisches Patentamt
European Patent Office
Office européen des brevets

(11) Publication number: **0 418 643 A2**

(12) # EUROPEAN PATENT APPLICATION


(21) Application number: **90116995.3**

(22) Date of filing: **04.09.90**

(51) Int. Cl.$^{5}$: **D05B 19/00**, G05B 19/405

(30) Priority: **18.09.89 JP 241103/89**
**18.09.89 JP 241104/89**
**18.09.89 JP 240948/89**

(43) Date of publication of application:
**27.03.91 Bulletin 91/13**

(84) Designated Contracting States:
**DE GB**



(71) Applicant: **MITSUBISHI DENKI KABUSHIKI KAISHA**
**2-3, Marunouchi 2-chome Chiyoda-ku**
**Tokyo 100(JP)**

(72) Inventor: **Shigeta, Katsunori, Mitsubis. Denki Mekatoronikusu**
**Sofutouea K.K., 1-14, Yasaminami 5-chome**
**Higashi-ku, Nagoya-shi, Aichi(JP)**
Inventor: **Nakamura, Haruyuki, Mitsubis. Denki Mekatoronikusu**
**Sofutouea K.K., 1-14, Yasaminami 5-chome**
**Higashi-ku, Nagoya-shi, Aichi(JP)**

(74) Representative: **Lehn, Werner, Dipl.-Ing. et al**
**Hoffmann, Eitle & Partner Patentanwälte**
**Arabellastrasse 4**
**W-8000 München 81(DE)**


(54) **Apparatus for creating stitching data for automatic sewing machines.**


(57) A device for creating stitching data for entry into a PROM cassette for use in connection with a sewing machine. A tablet digitizer (10) having a pattern entry area (13) for entering a stitch pattern using a cursor (12A) and a menu area (11A) having control options selectable with the cursor (12A) is operative with a processing system, comprising a CPU, memory storage, PROM writer and display for generating the commands for a given stitching pattern, which are then written into the PROM. The cursor has multiple switches (12b, c, d, e) for controlling certain input operations so that the opreator need not move between the pattern entry area (13) and the menu area (11A) so often. A CRT display also operates under CPU control and in connection with a display ROM for presenting a real-time display of the sewing patterns input by an operator via the tablet (10). Unique symbols are used to identify on the CRT display a variety of control options selected for the input stitch pattern.


Fig.1

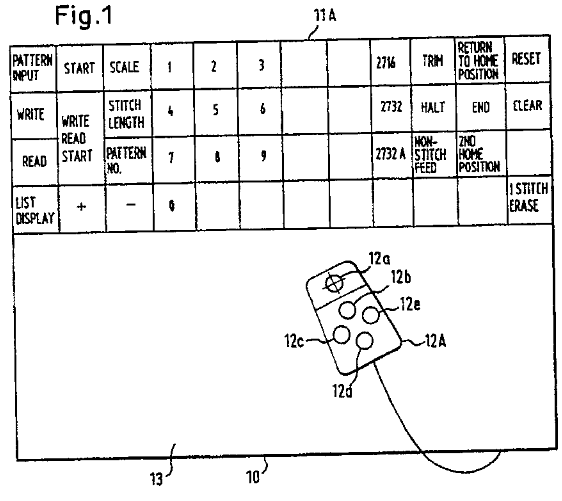


EP 0 418 643 A2

## FIELD OF THE INVENTION

This invention relates to a device for creating stitching data for a sewing machine, equipped with a foot pedal, for driving an object to be sewn in accordance with predetermined pattern data.

## DESCRIPTION OF THE PRIOR ART

Industrial sewing machines put into practical use include a sewing machine which holds a fabric to be stitched under pressure, moves the fabric in a predetermined plane, and automatically stitches predetermined sewing patterns in accordance with preprogrammed stitching information placed in a storage device. The stitching information retained in a storage medium in the storage device permits different stitching patterns to be easily accessed, and variable control of the sewing operation. A semiconductor memory, a magnetic card, a floppy disk or the like is employed as a storage medium, which retains information on how the sewing machine is to operate in a sequence of stitching operations.

The stored control information includes control commands such as relative position displacement between a needle and the fabric, stitching velocity, and stitching commands for controlling the sewing machine and its motor to follow a stitching pattern. The control information for one stitching pattern comprises a set of such control commands per stitch. To cause the sewing machine to sew a desired stitching pattern, therefore, it is necessary to create control data corresponding to that stitching pattern and store it in a storage medium.

Figure 9 is a perspective side view of a prior art stitching data creating device 1 for a sewing machine, taken from Japanese patent disclosure bulletin No. 1985-14852. In front of the device is a tablet digitizer 10 having a menu area 11 and a pattern entry area 13 for data entry. A cursor 12 is used to select required items from the menu area 11 and to obtain coordinate data from the pattern entry area 13. On the stitching data creating device 1 is an LED display panel 20 having various switches and LEDs, a CRT 26 for displaying pattern data, and an integrated circuit (IC) socket 18 designed to receive an IC PROM cassette for writing the stitching data onto the PROM as a storage medium and for reading the stitching data from the PROM. An eraser 8 is used for bulk erasing of the stitching data written on the PROM.

Figure 10 provides details of the menu area 11 and illustrates the cursor 12 having a reader (crosshairs) 12a and a switch 12b.

Operation of the stitching data creating device may be described according to a configuration diagram shown in Figure 11. There a bus 15 forms a common communication path for the tablet digitizer 10, via an interface 48, as well as storage devices including ROM 22 and RAM 24. The bus 15 also connects to a display subsystem at interface 32, the subsystem including a display 29, DMA controller 30 and storage RAM 28. The bus 15 also interfaces to a combination PROM writer 16/LED display 20 which, in turn, generates a control PROM for controlling the operation of a sewing machine 38 via controller 40. By drawing a desired stitching pattern on the tablet digitizer 10, using the cursor 12, stitching pattern data is generated in accordance with a control operation performed mainly by CPU 14 and the data is temporarily stored in a RAM 24. Then, the stitching data temporarily stored in the RAM 24 is written onto the PROM via interface 44 by means of the PROM writer 16. In a preferred embodiment, the PROM exists as a PROM cassette 42 that may be conveniently inserted into a sewing machine controller 40 to drive a sewing machine 38. Various mode settings and operating procedures for creating data are displayed on the LED display panel 20 as I/O data via the interface 44. A program for writing input data from the tablet digitizer 10 onto the PROM via interface 48, under control of the CPU 14, is stored in a system program ROM 22, and the CPU 14 performs processing in accordance with that program. X-Y coordinate data as input data from the tablet digitizer 10 is temporarily stored in the RAM 24, and X-Y coordinate data variations, i.e., relative value data such as stitch data obtained by operating on the X/Y coordinate data, also is temporarily stored on the RAM 24. The pattern displaying CRT 26 is provided to monitor the pattern data entered from the tablet digitizer 10. The stitching data stored in the RAM 24 is converted into picture displaying data by the CPU 14 and is stored in a picture data RAM 28 via interface 32. In this manner, a stitch pattern figure can be displayed in real-time on the CRT 26 by a CRT control circuit 46 to ensure ease of the input operation.

A specific data entry operation will now be described in accordance with Figure 10 and Figure 12, which shows an example of a stitch pattern. Initially, a drawing indicating the stitch pattern in Figure 12 may be placed over the pattern entry area 13 of the tablet digitizer 10. Then the reader 12a of the cursor 12 is moved to the "PATTERN INPUT" selection of the menu area 11, and the switch 12b is pressed to select this mode and accept pattern data. Similarly, the switch 12b is pressed each time the reader 12a is moved over other input condition selections. As an example, the entry of "SCALE", "1", "0", "0", "STITCH LENGTH", "3", ".", "0", "LOW SPEED", "POINT ENTRY", and "START" in this order causes the scale to be set to 100% whereby the size of the drawing is made equal to that of the entered data, the stitch length to be set to 3.0 mm, the stitchin velocity to be set to low speed, and an input method to be set to point entry. Then, the reader 12a of the cursor 12 is placed on a home position 0 of the stitch pattern in Figure 12 and the switch 12b is pressed to enter the home position. Thereafter, the required items from the menu area 11 and entry points of the stitch pattern are selected by means of the cursor 12 for example in the order: "NON-STITCH FEED", point A, point B, "STRAIGHT LINE ENTRY", "HIGH SPEED", point C, "POINT ENTRY", "MEDIUM SPEED 1", point D, point E, "STRAIGHT LINE ENTRY", "HIGH SPEED", point F, "HALT", point G, "POINT ENTRY", MEDIUM SPEED 1", point H, point I, "STRAIGHT LINE ENTRY", "HIGH SPEED", point J, "NON-STITCH FEED", home position 0, and "END", to create the Figure 12 pattern. The "END" input terminates the entry operation of the stitch pattern shown in Figure 12. During the above input operation, the scale value, stitch length, velocity command values, and entry method are displayed on the LED display panel 20 and the stitch pattern is displayed on the CRT 26.

Figure 13 is a flowchart illustrating the data processing in correspondence with the above input operation. When the switch 12b of the cursor 12 is pressed at step S1, the coordinate data is read at step S2. Whether the read data is an item selected from the menu area 11 or stitch pattern data is judged at step S3.

If the data is an item selected from the menu area 11, an identification of the selected item is made at step S5 and processing corresponding to the selected item is performed at step S6. If the data is stitch pattern data, the read coordinate position is operated on at step S4 and processing for creating the stitching data and displaying it on the LED display panel is performed at step S7, together with the results obtained by the processing at step S6. At step S8, processing for displaying the created stitching data on the CRT 26 or writing it into the PROM is then performed.

The processing for displaying the stitching data on the CRT 26 at step S8 will be described with reference to the stitch pattern in Figure 10. Since the stitching data (stitch data and non-stitching feed data) created at step S7 and stored in the RAM 24 comprises relative values, it is converted by the CPU 14 into absolute data (picture displaying data) whose home position 0 is (0, 0). The absolute data is stored in the picture data RAM 28 via the interface 32 and, based on that data, a stitch pattern figure can be displayed on the CRT 26 by the CRT control circuit 46.

However, whether the stitch pattern to be entered has been input correctly or not is unknown because a non-stitching feed portion of the displayed stitch pattern cannot be distinguished from a feed portion including stitching. Moreover, the positions where the control commands will operate, such as the home position, the stitching start position, thread trimming and any halt cannot be identified. Therefore, any input mistake may be not found until the pattern is actually stitched by the sewing machine.

Moreover, the cursor 12 must frequently be moved between points of a stitch pattern on the menu area 11 and the pattern entry area 13 of the tablet digitizer 10. Because of that movement, the next input point may be mistaken when the cursor 12 is moved from a point where the stitch pattern is being entered to the menu area 11, and then returned again to the point where the stitch pattern was being entered.

Such a mistake occurs more often when the stitch pattern is complicated. Further, an operator who is fatigued may make an error since he or she cannot always remember which point is currently being entered.

It is, accordingly, an object of the present invention to overcome the disadvantages in the prior art by providing a stitching data creating device for a sewing machine, which includes a cursor equipped with a plurality of switches that allow the speed command and input method to be switched from one to another and the stitching pattern displayed on the CRT to be re-displayed.

It is also an object of the present invention to overcome the disadvantages in the prior art by providing a stitching data creating device for a sewing machine which allows the non-stitching feed portion to be distinguished from a feed portion including stitching data, and control commands such as the home position, stitching start position, thread trimming and halt to be displayed by different symbols, when the stitching data is displayed on the display screen.

It is a further object of the present invention to overcome the disadvantages in the prior art by providing a stitching data creating device for a sewing machine which allows entered stitching data to be checked before the stitching is initiated.

## SUMMARY OF THE INVENTION

According to the present invention, a device for creating stitching data for a sewing machine uses a tablet digitizer having a pattern entry area for entering a stitch pattern using a cursor and a menu area having command options selectable with the cursor. The input stitching data is stored in memory and is accessable for writing stitching data to a PROM for control of the sewing machine and for display of the input pattern.

In a first feature of the present invention, the cursor is provided with one or more switches for inputting certain command options for the stitching pattern without accessing the menu area. In particular, the cursor has switches for at least one of speed control, input method and pattern redisplay. Multiple speed and input method selections are available by operation of the respective switches.

In a second feature of the present invention, the data input using the cursor, including coordinate data from the pattern entry area or command options from the menu area of the tablet digitizer and/or the cursor switches, is displayed in pattern form. Unique symbols for each stitching instruction, including stitching, non-stitching, home position, start, halt, thread trim and the like, are used to identify the input stitching pattern instructions on a display, as it is input. The unique symbols for each command together with a program to control the display are accessible from memory.

In a third feature of the present invention, control commands are available for displaying quantitatively stitching pattern data for each stitching point stored in memory, from a reference start position specified by the cursor. The data in memory is accessed as a predetermined group of points of the pattern with respect to the reference position and are provided for storage and display. The reference position is changeable on the basis of the newly displayed stitching data and data from memory again may be accessed for storage and display. The selection of a desired reference start position is assisted by use of a screen cursor, moveable in coordination with the movement of the normal cursor.

## BRIEF DESCRIPTION OF THE DRAWINGS

Figure 1 illustrates a tablet digitizer and a cursor of a stitching data creating device for a sewing machine according to the present invention.

Figure 2 shows a stitching data map.

Figures 3a and 3b are operation flowcharts.

Figures 4a and 4b provide examples of display screens.

Figure 5 is an operation flow chart for a feature of the present invention.

Figure 6 is an operation flow chart for another feature of the present invention.

Figure 7 is an example of a display screen for the present invention.

Figure 8 is a configuration diagram of a stitching apparatus according to the present invention.

Figure 9 is a perspective side view of a stitching data creating device for a sewing machine known in the prior art.

Figure 10 illustrates a prior art tablet digitizer and cursor.

Figure 11 is a configuration diagram of the prior art stitching data creating device for a sewing machine.

Figure 12 shows an example of a stitch pattern.

Figure 13 is a flowchart indicating the operation of a device in the prior art.

In the foregoing drawings, like reference characters designate like or corresponding parts through the several views.

## DESCRIPTION OF THE PREFERRED EMBODIMENTS

One embodiment of the present invention will now be described with reference to the drawings. Figure 1 illustrates a tablet digitizer 10, a cursor 12A including reader (crosshairs) 12a, a pattern entry area 13 and a menu area 11A relating to the present invention. Menu area 11A is similar to the prior art menu area but different therefrom in that it does not include "HIGH SPEED", "MEDIUM SPEED 1", "MEDIUM SPEED 2" and "LOW SPEED" for specifying the speed command or "POINT ENTRY" and "STRAIGHT LINE ENTRY" for specifying the pattern input method. Area 11A also includes "LIST DISPLAY", "+" and "-" as menu keys that are selectable by the reader 12a of cursor 12A to display stitching data. The latter keys are selected during, or on completion of, the creation of stitching data in order to display a predetermined area of the stitching data on a display screen. The "+" key is used to display stitching data following the currently displayed stitching data, and the "-" key to display stitching data shown immediately before the currently displayed stitching data.

In addition to the reader 12a, cursor 12A has switches 12b, 12c, 12d and 12e, and thereby differs from the prior art cursor. By pressing the switch 12b, the reader 12a reads the specified data as in the prior art. By pressing the switch 12c, the speed commands are cyclically changed over from one to another, i.e., in order of "HIGH SPEED", "MEDIUM SPEED 1", "MEDIUM SPEED 2", and "LOW SPEED", via signals output from the cursor. By pressing the switch 12d, the pattern input method is alternately switched between "POINT ENTRY" and "STRAIGHT LINE ENTRY", via cursor output signals. The switch 12e is designed to output a signal for re-displaying the stitching pattern displayed on the screen 26.

A specific input method for the sample stitch pattern shown in Figure 12 will now be described according to Figure 1. The input method is similar to, but significantly different from, that of the prior art stitching data creating device for a sewing machine. First, a drawing indicating the stitch pattern in Figure 12 is placed onto the pattern entry area 13 of the tablet digitizer 10. Then the reader 12a of the cursor 12A is placed over the "PATTERN ENTRY" selection of the menu area 11A, and the switch 12b is pressed to enter this mode. In a similar manner, the switch 12b is pressed with the reader 12a on "SCALE", "1", "0", "0", "STITCH LENGTH", "3", ".", "0", and "START" in this order to define input conditions. This entry operation causes the scale to be set to 100% whereby the size of the drawing is made equal to that of the entered data and stitch length to be set to 3.0 mm. The stitching speed may be set to "low speed" by pressing the switch 12c of the cursor 12A. Also the input method may be set to "point entry" by pressing the switch 12d of the cursor 12A.

Then, in order to define a specific pattern, the reader 12a of the cursor 12A is placed on a home position, 0, of the stitching pattern in Figure 12 and the switch 12b is pressed to enter the home position. Thereafter, the required items from the menu area 11A and entry points of the stitch pattern are selected by means of the cursor 12A in the order "NON-STITCH FEED", point A, point B, "STRAIGHT LINE ENTRY", "HIGH SPEED" (by switch 12c), point C, "POINT ENTRY" (by switch 12d), "MEDIUM SPEED 1" (by switch 12c), point D, point E, "STRAIGHT LINE ENTRY" (by switch 12d), "HIGH SPEED" (by switch 12c), point F, "STRAIGHT LINE ENTRY" (by switch 12d), "HIGH SPEED" (by switch 12c), point J, "NON-STITCH FEED", home position 0, and "END".

If the input data is incorrect, the stitching data and the corresponding area of the stitching pattern being displayed on the CRT 26 can be erased by pressing "STITCH ERASE" or any other appropriate key in the menu area 11A. Erasure is usually performed essentially oppositely to data entry, by moving the cursor from point to point, with the points defining the line to be deleted, in an erase mode. However, if the points selected using the cursor in the erase mode are not precisely the same or aligned with those defined during the line entry mode, a part of the original line may not be erased and will continue to appear on the display, even though the actual stitch data will have been accurately corrected by the CPU. Therefore, the actual display may appear littered with partially erased data. This problem can be corrected by pressing the redisplay switch 12e, which serves to rewrite the RAM 28 serving the display with the current, corrected stitch data from RAM 24.

Once the above operation is completed to the operator's satisfaction, the input operation of the stitch pattern shown in Figure 12 is terminated. During that input operation, the scale value, stitch length, velocity command values, and entry method were displayed on the LED display panel 20.

Each time the switch 12b of the cursor 12A was pressed in the aforementioned entry operation, stitching data was created in due order and stored into RAM 24, and further, absolute values of the stitching data referenced from the input home position for displaying the position on a CRT 26 were stored in RAM 28.

Figures 2(a) and 2(b) illustrate locations of the stitching data stored in the RAM 24 by the input operation. Fig. 2(a) indicates one unit of the stitching data, for one stitch. The first byte stores a control command as above explained, the second byte stores an X-axis feed stroke of the stitch data or non-stitching feed data, and the third byte stores a Y-axis feed stroke of the stitch data or non-stitching feed data. The units of stitching data from the first stitch to the final data, including the control commands of the stitching data, are stored in order of entry at predetermined addresses as shown in Fig. 2(b).

Figure 5 is a flowchart showing data processing corresponding to the entry operation. When the switch 12b of the cursor 12A is pressed at step S1, coordinate data is read at step S2, and the read data is judged to be an item selected from the menu area 11A or a stitch pattern (position data) at step S3. If the data is an item selected from the menu area 11A, which item has been selected is judged at step S5 and processing corresponding to the selected item is performed at step S6. If the read data is judged to be stitch pattern data, the read coordinate data is operated on at step S4. In the meantime, if the switch 12c, 12d or 12e of the cursor 12A has been pressed at step S1, the signal is processed at step S9 to define the sewing speed (switch 12c), input method (switch 12d), or to re-display the stitching pattern displayed on the CRT 26 (switch 12e). At step S7, processing for creating the stitching data and displaying it into the LED display panel is performed in accordance with the data processed at steps S4, S6 or S9. Then, at step S8, processing for displaying the created stitching data on the CRT 26 or processing for writing it into a PROM is performed.

Figure 6 is a flowchart particularly indicating the generation of a display of the stitch pattern corresponding to the above entry operation. The data created is obtained at step S10, and the obtained data is judged to be stitch data, non-stitching feed data or sewing machine control data at step S11. If the obtained data is judged to be home position data, a first unique "+" mark is displayed at the current position at step S12. Similarly, if the obtained data is judged to be stitching start data, a second unique " + " mark is displayed at the current position at step S13. If the input is judged to be halt data, a third unique " + " mark is displayed at the current position at step S14, and if it is judged to be thread trimming data, a fourth unique " + " mark is displayed at the current position at step S15. Each displayed mark uniquely identifies the particular operation selected by the operator, as seen in Figure 7. If the obtained data is judged to be stitch data, the "+" mark is displayed at a position a feed stroke away from the preceding position and also the preceding position and the current position are connected by a straight line at step S16 to give the appearance of a straight line with hatch marks, as seen in Figure 7. If the obtained data is judged to be non-stitching feed data, the "+" mark is displayed at a position a feed stroke away from the preceding position at step S17. No line connection is used, whereby a discontinuous appearance is obtained.

By performing the above processing, the functional commands included in the data can be displayed on the display screen.

As seen in Figure 7, beginning with a Home position O, a non-stitching movement 1 proceeds to point A where a Stitching Start symbol identifies the beginning of a stitching movement in direction 2, proceeding to points B, C and D. At point D, stitching movement in direction 3 begins and proceeds through points E and F, at which point a Halt was entered. Following the Halt, stitching proceeds through points G and H, then shifts to direction 4 and proceeds to points I and J, where a trim takes place. From point J to Home along direction 5, a non-stitching feed operation is conducted to complete the pattern. The added functionality of unique symbol generation requires some modification of the prior art hardware of Figure 11. In particular, as shown in Figure 8, a screen display program ROM 29 stores a program for generating and displaying predetermined symbols on the display screen corresponding to actual stitching portions, non-stitching feed portions, and control commands such as the home position, the stitching start position, thread trimming and halt.

A display operation indicating on a real time basis the sequence of inputs will be described according to the flowcharts shown in Figures 3a and 3b. When "LIST DISPLAY" on menu 11A is selected by the switch 12b of the cursor 12A in Figure 1, step S20 causes the device to enter a list display mode for displaying quantitatively the stitching data on the screen. At step S21, using an input from cursor 12A identifying a start position, the RAM 24 that stores the specified stitch data of the data to be displayed is addressed. At this time, the first address is specified if the addressing operation later described in connection with Figure 3b is not performed. At step S22, data for 16 stitches, i.e. 48-bytes of data, beginning at the specified address, is converted into display data comprising the stitch number, the related control command and X, Y values. At step S23, the converted data is processed for display on the display screen. If the "+" key has been selected by the switch 12b of the cursor 12A in the aforementioned list display mode, step S24 causes a branch to step S27. Similarly, if the "-" key has been selected, step S15 causes a branch to step S28. Step S27 advances the currently indicated address by 16 stitches. Step S28 backs up the currently indicated address by 16 stitches. Then, step S29 judges whether or not data exists at the addresses for the 16 stitches beginning at the address set at steps S27 or S28. If that data exists, the processing of step S22 above explained is performed to display that data. If such data does not exist, step S30 returns the address set at steps S27 or S28 to the original address, and at the same time, issues a message that the data does not exist.

If the "CLEAR" key has been selected by the switch 12b of the cursor 12A in the above list display mode, the device leaves the list display mode after performing processing therefor at step S26.

The operation of addressing specified stitch data at the aforementioned step S21 will now be described according to Figure 3b. When the device goes into the list display mode at S20, the cursor 12A is ready to read coordinates from the pattern entry area 13 of the tablet digitizer 10 at step S21a and a screen cursor is displayed at a position of the read coordinate data. When the cursor 12A is moved in this state, the screen cursor also moves accordingly. Step S21b judges whether or not the screen cursor has approached a position of the stitch pattern on display (e.g., $X \leqq 1.0$ mm, $Y \leqq 1.0$ mm). If it has approached that position, step S21c displays the screen cursor at the same position as the approached stitch position. If step S21d judges that the approached stitch position is a destination position, step S21e defines an address of that stitch position. If it is not a destination position, an instruction is given to place the cursor 12A away from the approached stitch position at step S21f and the program returns to the processing of step S21a again. If it is a destination position, the address of the specified stitch position is defined for display in step 21e.

Figures 4a and 4b illustrate an example of a display screen according to this embodiment of the present invention. The numeral 26a indicates a stitch pattern similar to that shown in Figure 12. Figure 4a shows the CRT display screen 26 when the addressing operation is not performed, wherein area 26d indicates the stitching data of 16 stitches, i.e. the first to the 16th stitches, of the stitch pattern. Figure 4b shows the display screen when the addressing operation is performed, wherein area 26b indicates the stitching data of 16 stitches, i.e. the 47th to the 62nd stitches, of the stitch pattern. Reference 26c indicates the screen cursor which is switched from a " + " to an "x" mark when it has approached the 47th stitch, i.e. the destination point, of the stitch pattern to indicate that that stitch position has been specified.

It will be appreciated that, instead of converting the 48-bytes of data (16 stitches) beginning at the specified address into display data at step S22 and correspondingly incrementing or decrementing the address by a like quantity at steps S24 or S25, other quantities may be selected. For example, incrementing the address by eight stitches at steps S24 or S25 will allow new data to be displayed with half of the previously displayed data remaining.

It will be appreciated also that the pattern data displayed is not limited to that of 16 stitches and may be changed by the format of the display screen and appropriate display control.

It will be apparent that the above described arrangement achieves almost error-free, fatigue-reducing stitching data creation. With a plurality of switches on the cursor, one of which is employed to read the coordinate data from the tablet digitizer and at least another of which is employed to change over the sewing machine stitching speed or input method, these latter parameters may be changed without moving the cursor away from the point of last stitch pattern data entry. Also, redisplay can be readily commanded after erasure of an incorrect stitching pattern. As a result, an operator may operate the device easily without needing to remember the current position of the stitch pattern being entered.

Further, the invention allows actual stitch portions, non-stitching feed portions, and control commands such as a home position command, a stitching start position command, a thread trimming command and a halt command to be displayed by different symbols, so that any stitch pattern any entry mistake will be discovered before the pattern is actually stitched by the sewing machine. Finally, stitching data can be displayed on the display screen, at any desired area of the stitching pattern, by a simple operation, and therefore the stitch pattern can be reviewed in detail before the pattern is actually stitched by the sewing machine.

The present invention is not limited to the above described embodiments but is intended to encompass these and other embodiments as would be understood by one of ordinary skill in the art. By example and without limitation, the use of cursor 12A would not preclude use of menu 11A selections for speed and input method, if desired for operator convenience.

## Claims

1. A device for creating stitching data for a sewing machine comprising:

a tablet digitizer having a coordinate-defined pattern entry area for entering a stitch pattern and a menu area for providing a plurality of selectable control inputs;

a cursor movable with respect to said tablet digitizer for reading coordinate data of said tablet digitizer;

a plurality of switch means on said cursor selecting an input operation and generating further control inputs;

a controller for processing the read coordinate data and control inputs and generating stitching data;

a display having a display area; and

means responsive to said stitching data for displaying the stitching data as a stitch pattern on said display area at a predetermined portion of said display area.

2. A device for creating stitching data for a sewing machine defined in claim 1, further comprising:

means for displaying said stitching data in numerical or written form at another predetermined portion of said display area;

means for specifying a location on said stitching pattern of interest;

means for specifying for display in numerical or written form a portion of the stitching data, comprising a predetermined number of stitches after or before said specified location.

3. A device for creating stitching data for a sewing machine comprising:

a tablet digitizer having a coordinate-based pattern entry area for entering a stitch pattern and a menu area for providing a plurality of selectable input control signals;

a cursor movable with respect to said tablet digitizer for reading coordinate data of said tablet digitizer;

a plurality of switch means for identifying an input operation and generating additional input control signals;

a controller for processing the read coordinate data and input control signals and generating stitching data; and

a display means having a display area for displaying the stitch pattern on a first predetermined portion of the display area;

means for specifying any position of the stitch pattern displayed on said display area;
means for changing said specified position, as required; and
means for displaying said stitching data, in numerical or written form, for a predetermined number of stitches from the specified position of the stitch pattern, at a second predetermined portion of said display area.

4. A device for creating stitching data for a sewing machine defined in claim 3, said means for changing the specified position comprised means for automatically advancing said specified position by a predetermined number of stitches in a direction specified by the operator.

5. A device for creating stitching data for a sewing machine comprising:
a tablet digitizer having a coordinate-defined pattern entry area for entering a stitch pattern and a menu area for providing a plurality of selectable control signals;
a cursor movable on said tablet digitizer for reading coordinate data;
a plurality of switch means for selecting input operations and generating further control signals;
a controller for processing the read coordinate data and control signals and generating stitching data; and
a display having a screen for displaying the stitch pattern in a first portion of said screen and for displaying in a second portion of said screen selected stitching data, including the feed stroke per stitch of the sewing machine, and control commands;
means for displaying a screen cursor for identifying a position on said display screen;
specifying means for moving said screen cursor within said first portion of said screen and for specifying any position of the stitch pattern displayed on said first portion of said screen;
means for displaying said screen cursor at the same point as a stitch position of said stitch pattern when the screen cursor is moved by said specifying means within a predetermined distance of said stitch position; and
means for displaying at said second portion of said display screen the stitching data for a predetermined number of stitches located with respect to a position on the stitch pattern specified by said specifying means.

6. A device for creating stitching data for a sewing operation including a tablet digitizer having a coordinate-defined pattern entry area for entering a stitch pattern, a cursor freely movable on said tablet digitizer for reading coordinate data from said tablet digitizer, and a controller for processing the read coordinate data and control signals, for processing the entered coordinate data and for creating stitching data, the improvement comprising:
a plurality of switches incorporated in said cursor, one of said switches being employed to read the coordinate data from said tablet digitizer and at least another to generate control signals which control data entry or the sewing operation.

7. The device of claim 6 wherein said control signals comprise at least one of stitching speed control, input method control, and screen redisplay.

8. A device for creating stitching data for a sewing machine comprising:
a tablet digitizer having a coordinate-defined pattern entry area for entering a stitch pattern and a menu area for providing a plurality of selectable control signals;
a cursor freely movable on said tablet digitizer for reading coordinate data from the tablet digitizer;
a controller for processing the read coordinate data and said control signals, for processing the entered coordinate data and for creating stitching data; and
a plurality of switches incorporated in said cursor, one of said switches being employed to read the coordinate data from said tablet digitizer and at least another to generate further control signals for processing by said controller.

9. The device of claim 8 wherein said further control signals comprise at least one of stitching speed control, input method control and screen redisplay.

10. The device of claim 9 wherein at least one of said switches is operative to provide multiple selections.

11. A device for creating stitching data for a sewing machine comprising:
a display means for displaying a stitching pattern;
a tablet digitizer having a coordinate-defined pattern entry area for entering a stitch pattern and a menu area for providing a plurality of selectable control signals, at least one of said control signals being operative to erase a portion of said stitching pattern display;
a cursor freely movable on said tablet digitizer for reading coordinate data from the tablet digitizer;
a controller for processing the read coordinate data and control signals, for creating stitching data; and
a plurality of switches incorporated in said cursor, one of said which switches being employed to read the coordinate data from said tablet digitizer and at least another to re-display the stitching pattern created on the screen subsequent to an erasing operation.

12. A device for creating stitching data for a sewing operation comprising:
a tablet digitizer having a coordinate-defined pattern entry area for entering a stitch pattern and a menu area for providing a plurality of selectable control signals;
a cursor freely movable on said tablet digitizer for reading coordinate data from said tablet digitizer;
a controller for processing the read coordinate data and control signals and generating stitching data; and
a display means having a display screen for displaying the stitch pattern, said display means comprising:
means for displaying actual stitch portions and non-stitching feed portions as different symbols in displaying the stitch pattern on the display screen in accordance with the created stitching data.

13. The device of claim 11 wherein said means for displaying is operative to display symbols uniquely identifying commands related to said stitching operation.

14. A device for creating stitching data for a sewing machine comprising:
a tablet digitizer having a coordinate-defined pattern entry area for entering a stitch pattern and a menu area for providing a plurality of selectable control signals;
a cursor freely movable on said tablet digitizer for reading coordinate data from the tablet digitizer;
means for identifying an input operation and for generating control commands;
a controller for processing the read coordinate data and control signals and generating stitching data; and
a display means having a display screen for displaying the stitch pattern, said display means comprising means for displaying actual stitch portions, non-stitching portions and selected commands as different symbols in displaying the stitch pattern on the display screen in accordance with the created stitching data.

Fig.1

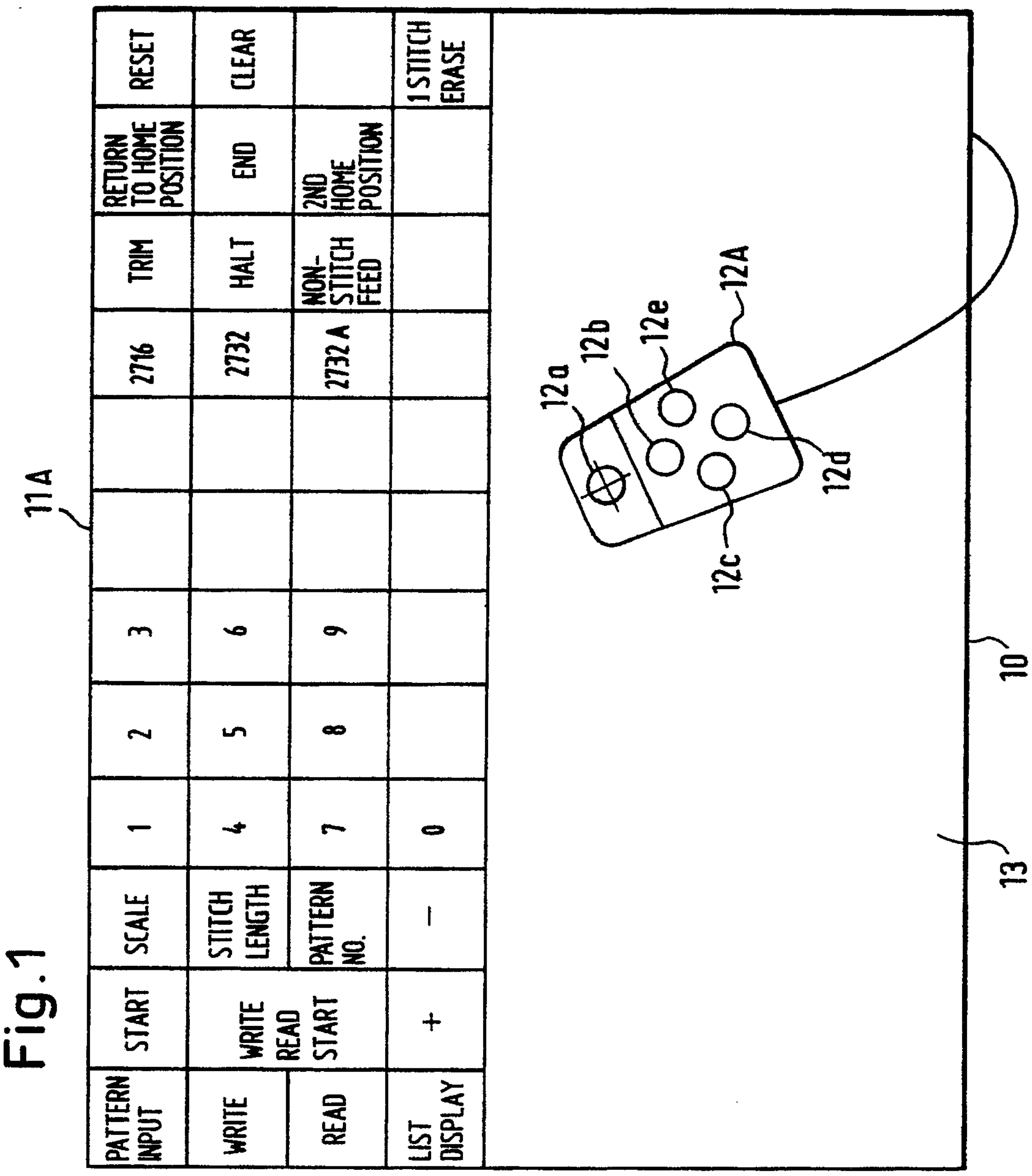
PATTERN INPUT
START
SCALE
1
2
3
2716
TRIM
RETURN TO HOME POSITION
RESET
WRITE
WRITE READ START
STITCH LENGTH
4
5
6
2732
HALT
END
CLEAR
READ
PATTERN NO.
7
8
9
2732 A
NON-STITCH FEED
2ND HOME POSITION
LIST DISPLAY
+
−
0
1 STITCH ERASE
11A
12a
12b
12e
12A
12c
12d
10
13

Fig.2(a)

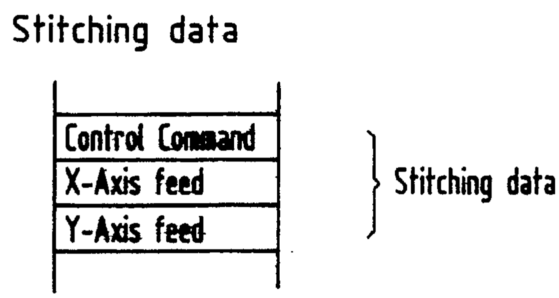
Stitching data
Control Command
X-Axis feed
Y-Axis feed
Stitching data

Fig.2(b)

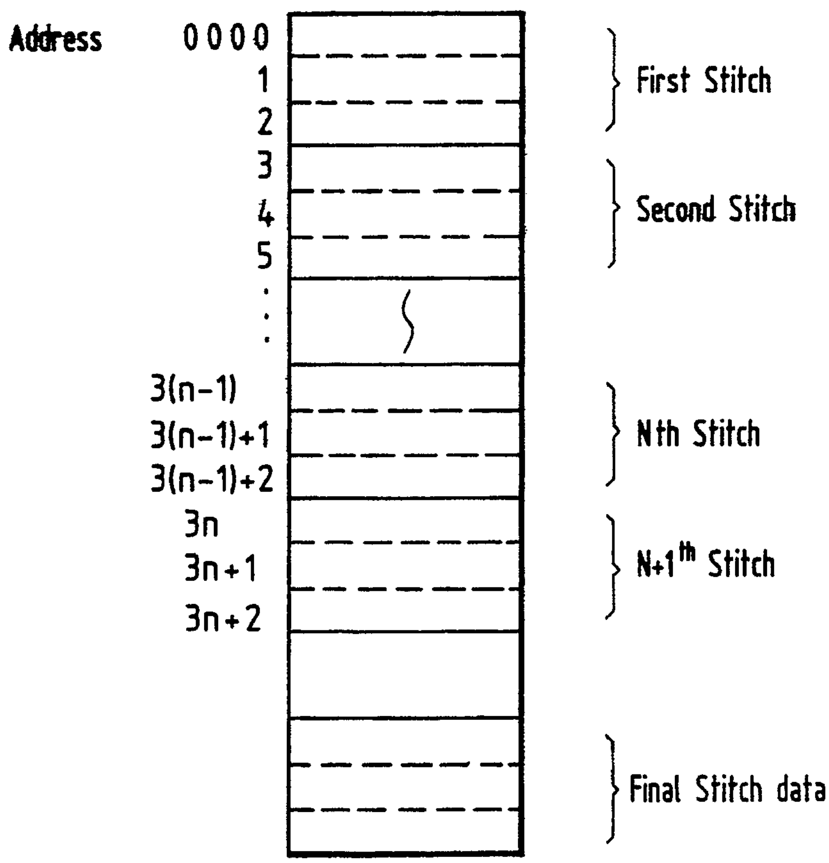
Address
0000
1
2
3
4
5
3(n-1)
3(n-1)+1
3(n-1)+2
3n
3n+1
3n+2
First Stitch
Second Stitch
Nth Stitch
N+1th Stitch
Final Stitch data

Fig.3(a)

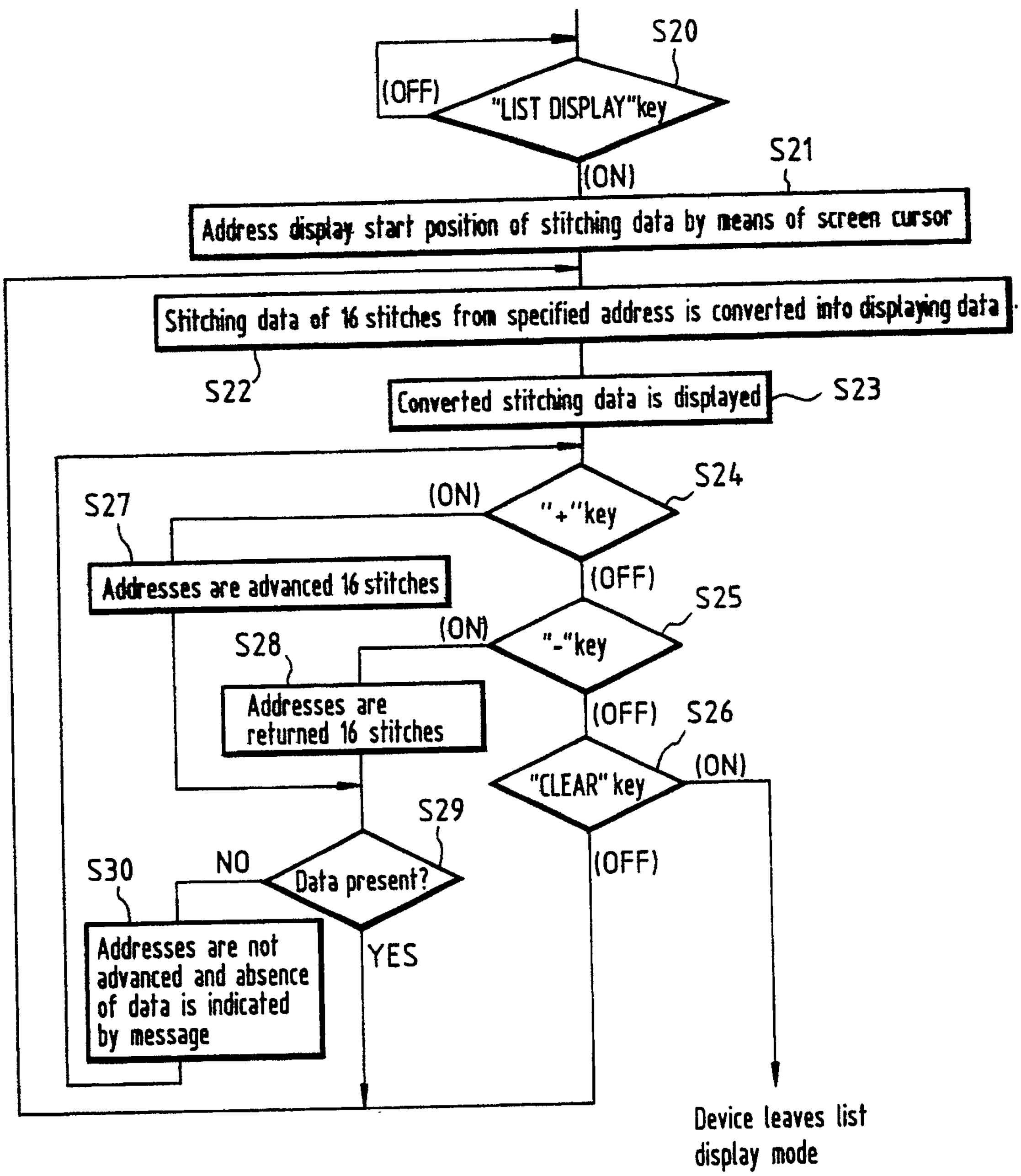
S20
(OFF)
"LIST DISPLAY" key
(ON)
S21
Address display start position of stitching data by means of screen cursor
Stitching data of 16 stitches from specified address is converted into displaying data
S22
Converted stitching data is displayed
S23
S24
(ON)
"+" key
S27
Addresses are advanced 16 stitches
(OFF)
S25
(ON)
"-" key
S28
Addresses are returned 16 stitches
(OFF)
S26
"CLEAR" key
(ON)
S29
S30
NO
Data present?
YES
Addresses are not advanced and absence of data is indicated by message
(OFF)
Device leaves list display mode

Fig.3(b)

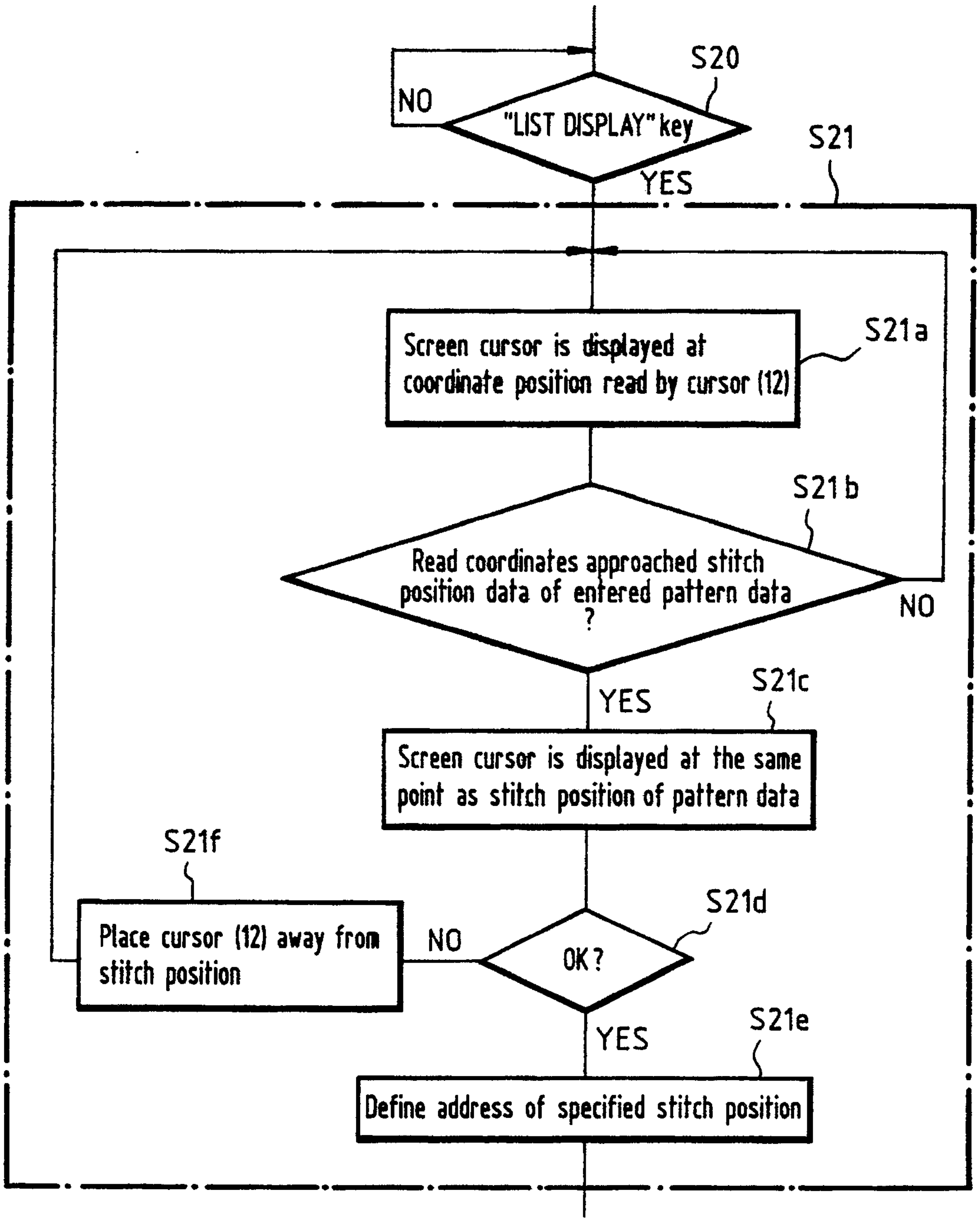
S20
NO
"LIST DISPLAY" key
YES
S21
Screen cursor is displayed at coordinate position read by cursor (12)
S21a
S21b
Read coordinates approached stitch position data of entered pattern data ?
NO
YES
S21c
Screen cursor is displayed at the same point as stitch position of pattern data
S21f
Place cursor (12) away from stitch position
NO
S21d
OK?
YES
S21e
Define address of specified stitch position

Fig. 4(a)

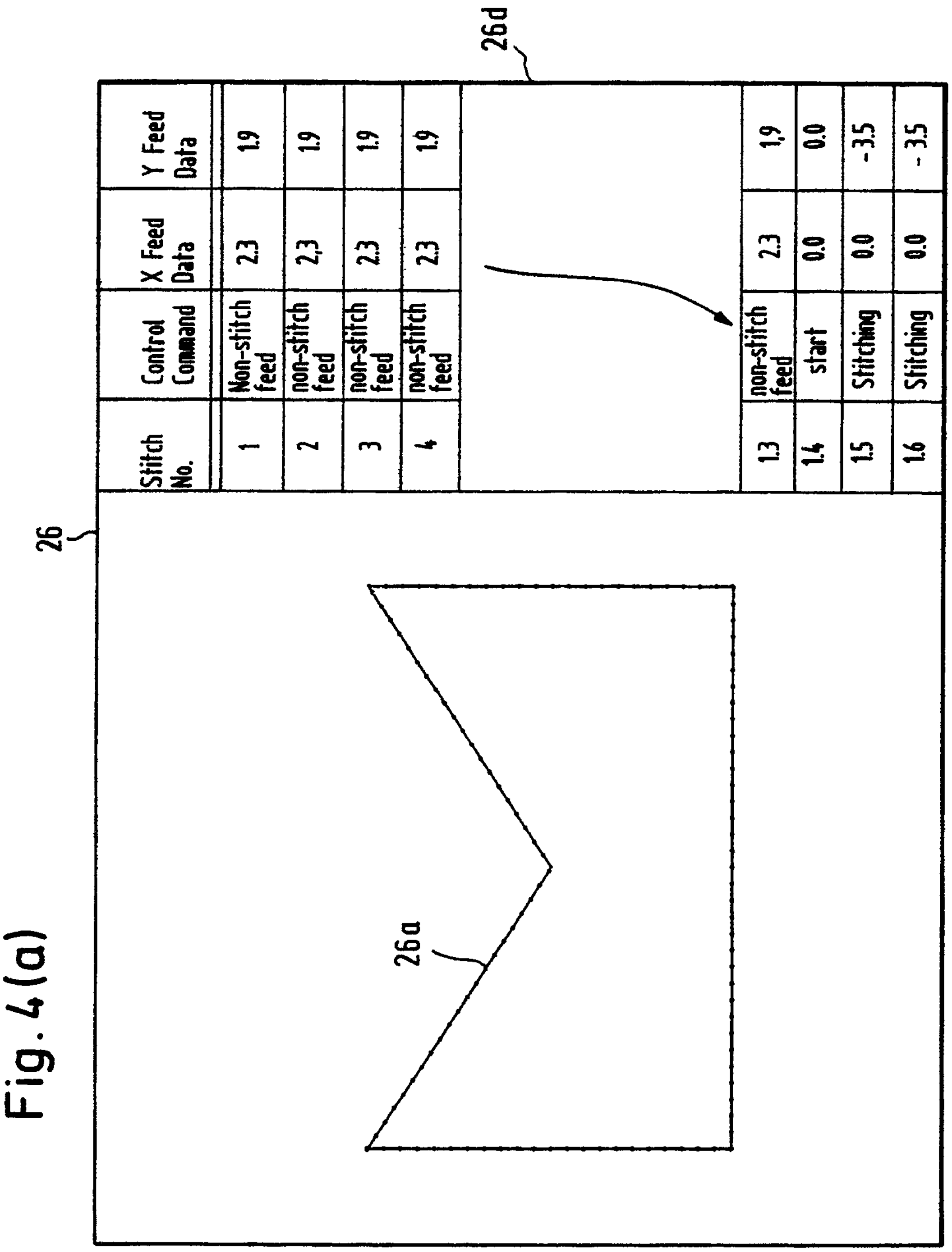
26
26d
26a
Stitch No.
Control Command
X Feed Data
Y Feed Data
1 Non-stitch feed 2.3 1.9
2 non-stitch feed 2,3 1.9
3 non-stitch feed 2.3 1.9
4 non-stitch feed 2.3 1.9
13 non-stitch feed 2.3 1.9
14 start 0.0 0.0
15 Stitching 0.0 -3.5
16 Stitching 0.0 -3.5

Fig.4(b)

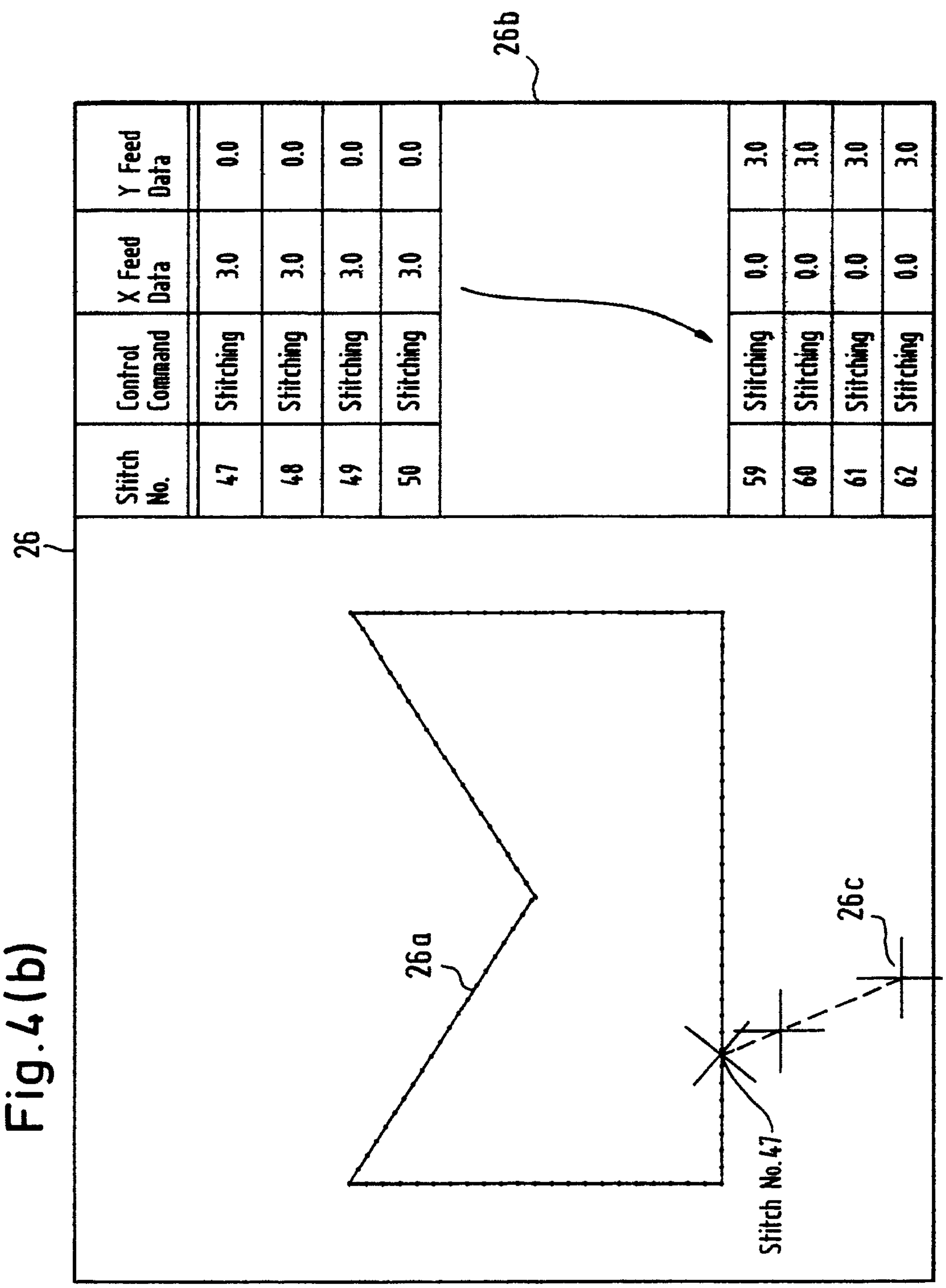
26
26b
26a
26c
Stitch No.47
Stitch No.
Control Command
X Feed Data
Y Feed Data
47
Stitching
3.0
0.0
48
Stitching
3.0
0.0
49
Stitching
3.0
0.0
50
Stitching
3.0
0.0
59
Stitching
0.0
3.0
60
Stitching
0.0
3.0
61
Stitching
0.0
3.0
62
Stitching
0.0
3.0

Fig.5

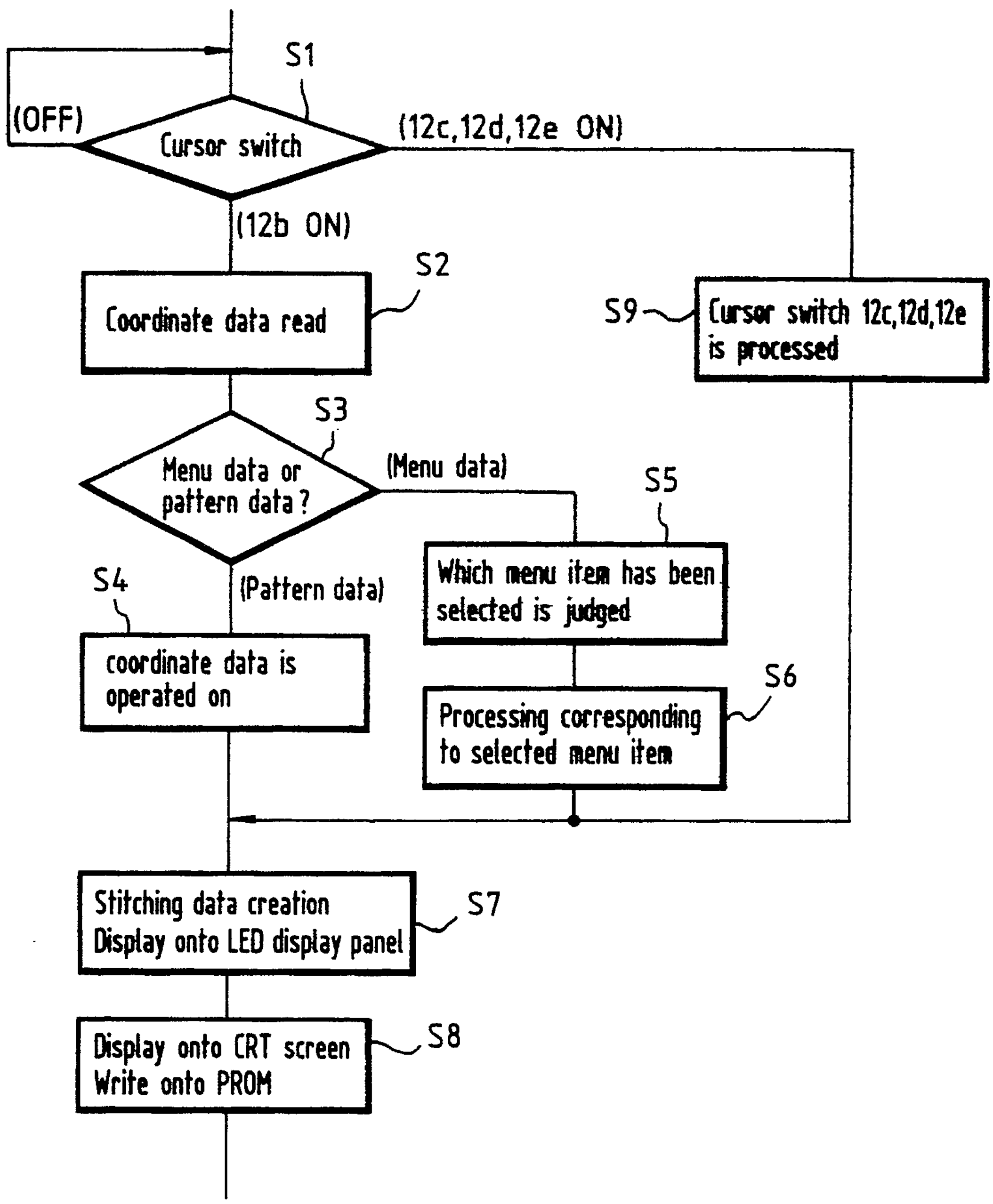
S1
(OFF)
Cursor switch
(12c,12d,12e ON)
(12b ON)
S2
Coordinate data read
S9
Cursor switch 12c,12d,12e is processed
S3
Menu data or pattern data?
(Menu data)
S5
Which menu item has been selected is judged
S4
(Pattern data)
coordinate data is operated on
S6
Processing corresponding to selected menu item
Stitching data creation
Display onto LED display panel
S7
Display onto CRT screen
Write onto PROM
S8

Fig.6

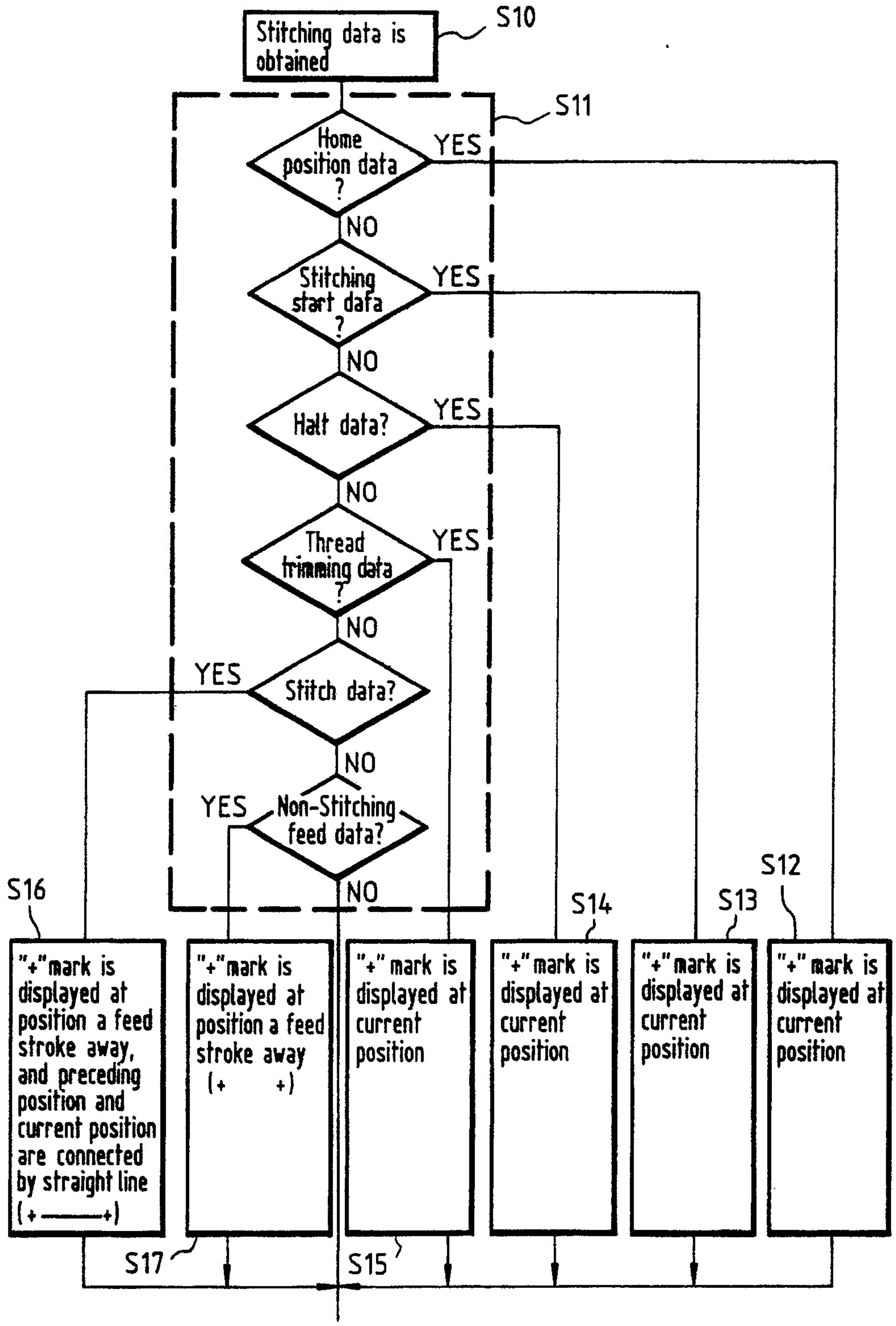
S10
Stitching data is obtained
S11
Home position data ?
YES
NO
Stitching start data ?
YES
NO
Halt data?
YES
NO
Thread trimming data ?
YES
NO
Stitch data?
YES
NO
Non-Stitching feed data?
YES
NO
S16
"+"mark is displayed at position a feed stroke away, and preceding position and current position are connected by straight line (+——+)
"+"mark is displayed at position a feed stroke away (+ +)
"+" mark is displayed at current position
S14
"+" mark is displayed at current position
S13
"+" mark is displayed at current position
S12
"+" mark is displayed at current position
S17
S15

Fig.7

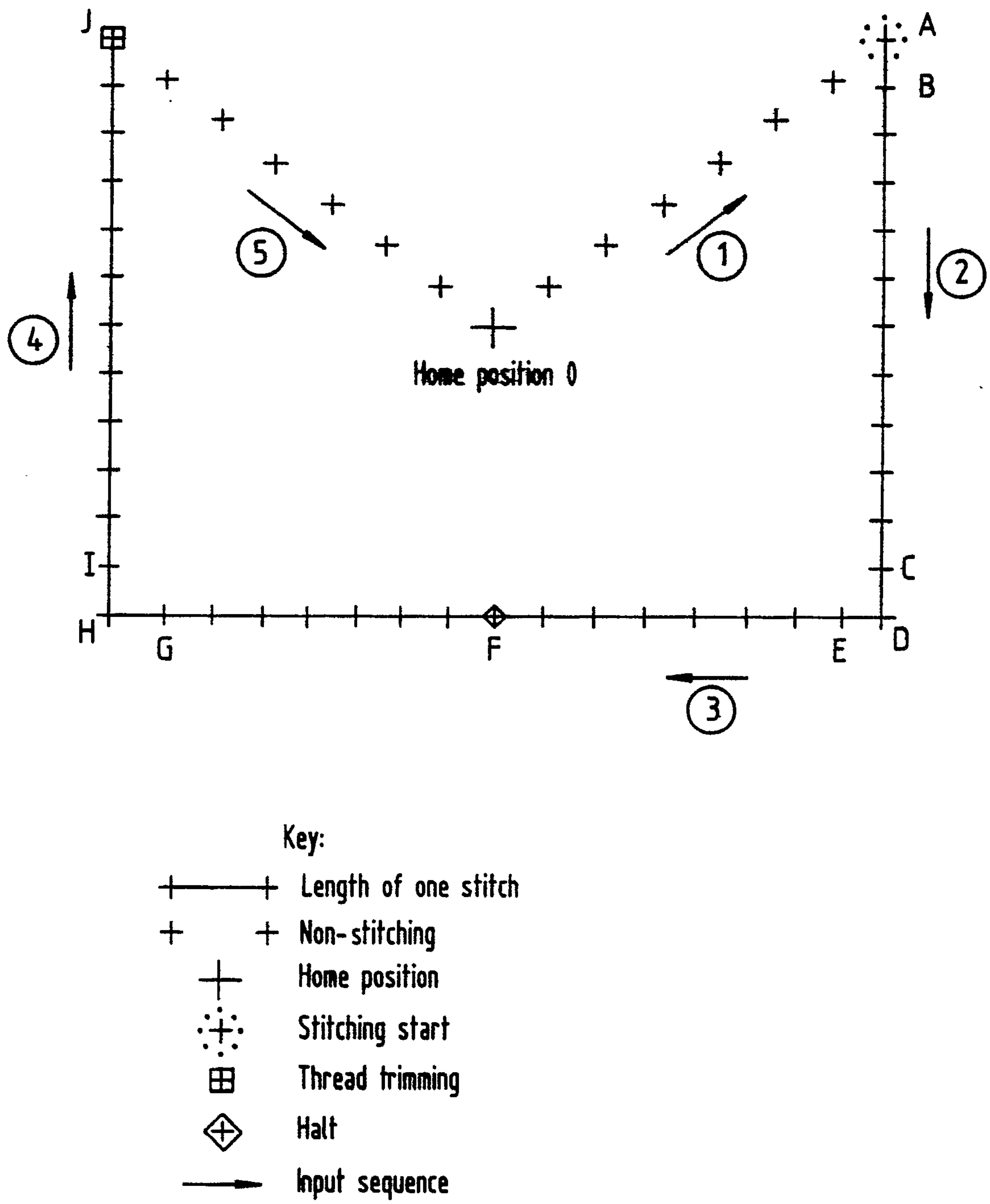
J
A
B
5
1
2
4
Home position 0
I
C
H
G
F
E
D
3
Key:
Length of one stitch
Non-stitching
Home position
Stitching start
Thread trimming
Halt
Input sequence

Fig.8

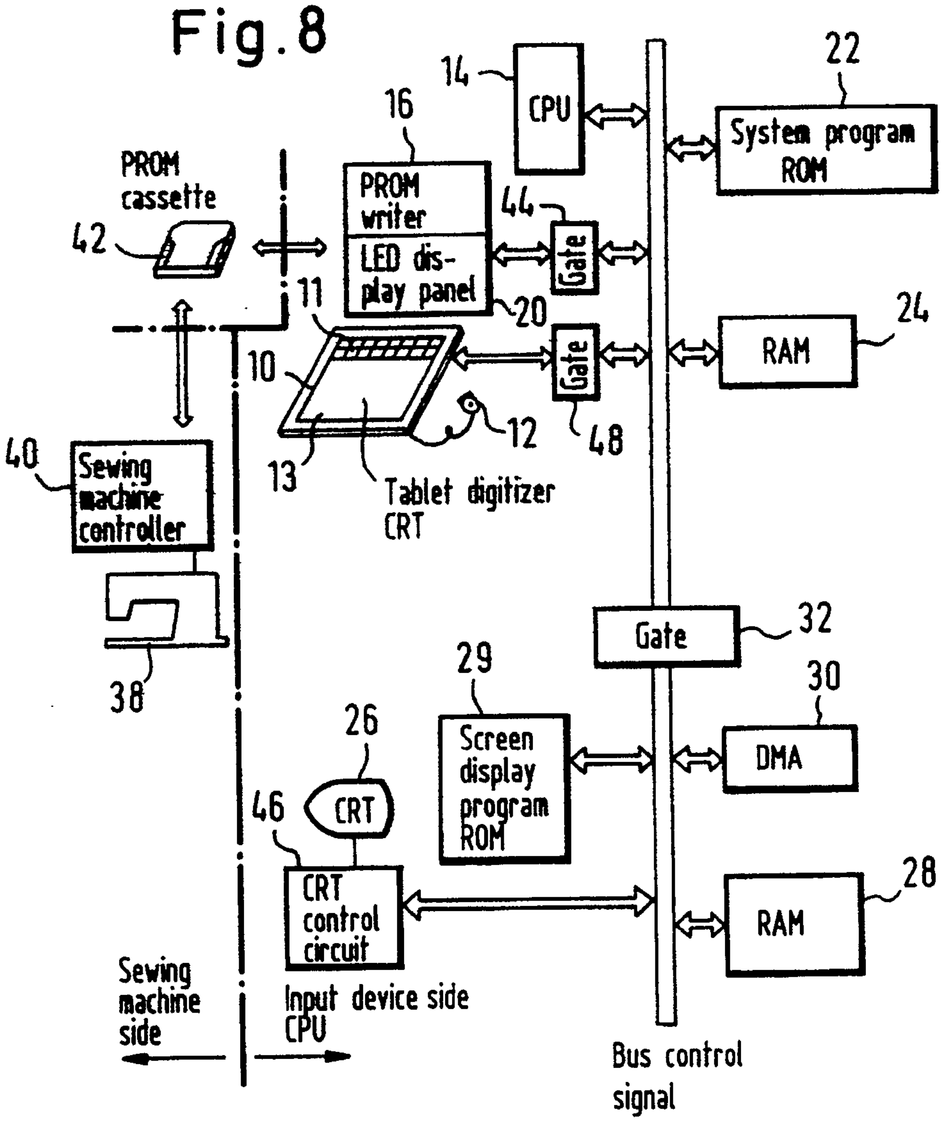
14
CPU
16
22
System program ROM
PROM cassette
PROM writer
42
44
Gate
LED display panel
11
20
24
RAM
10
Gate
12
48
40
Sewing machine controller
13
Tablet digitizer CRT
Gate
32
29
30
38
26
Screen display program ROM
DMA
46
CRT
CRT control circuit
28
RAM
Sewing machine side
Input device side CPU
Bus control signal

Fig. 9

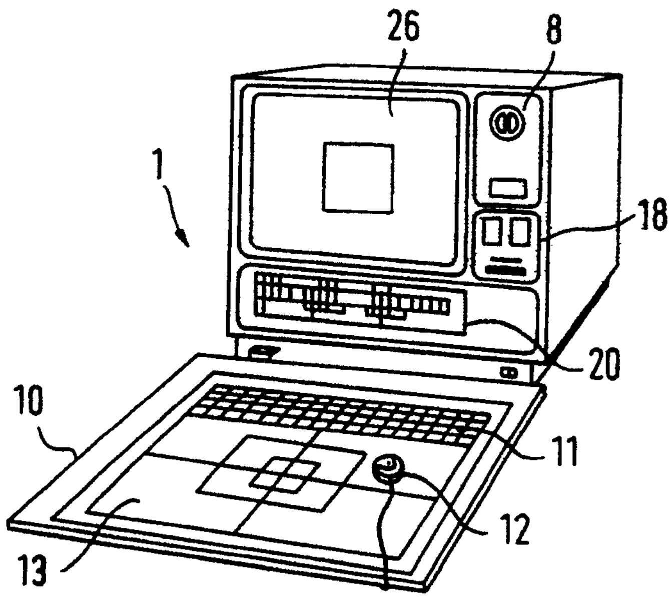

Fig.10

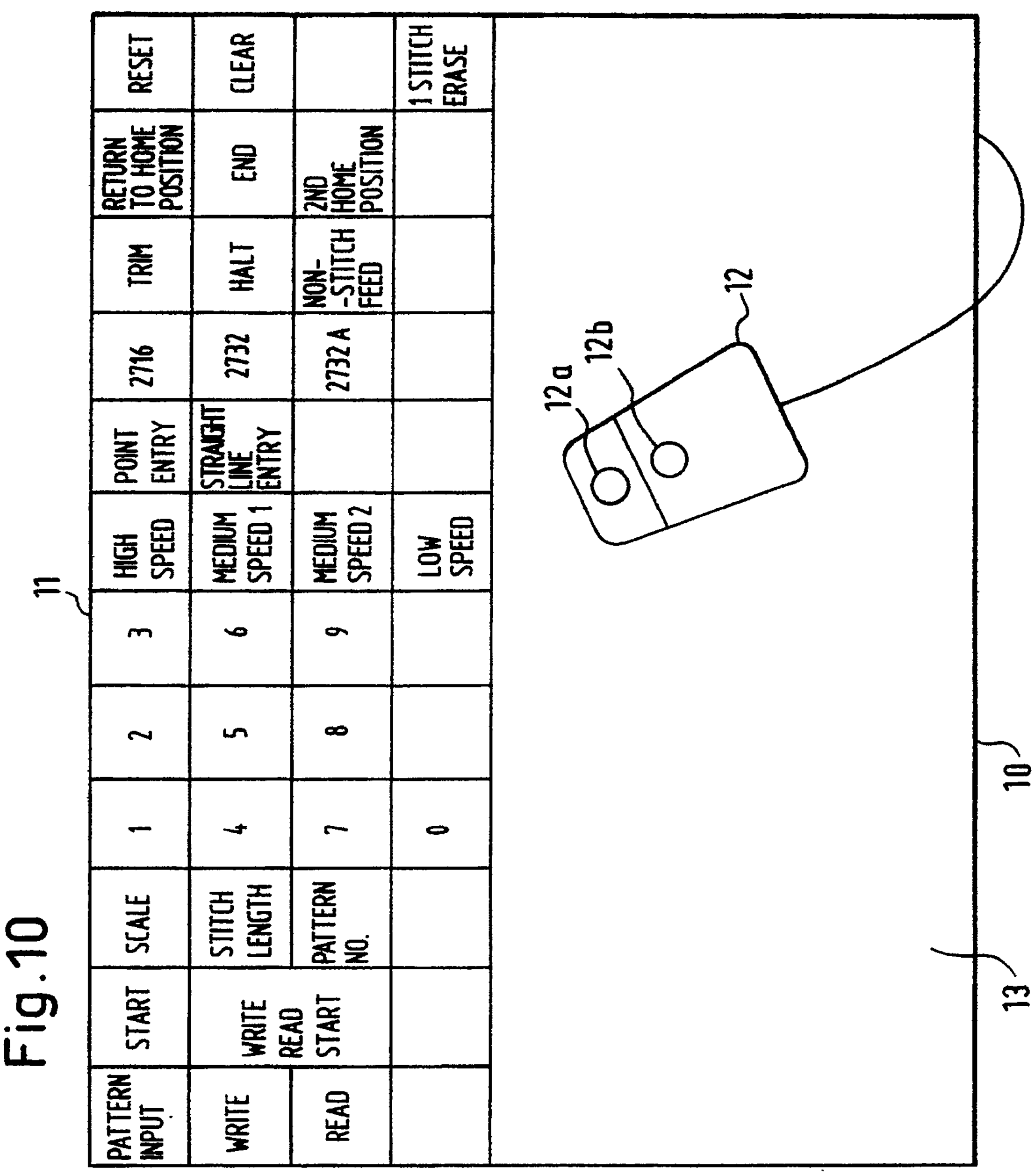
PATTERN INPUT
START
SCALE
1
2
3
HIGH SPEED
POINT ENTRY
2716
TRIM
RETURN TO HOME POSITION
RESET
WRITE
WRITE READ START
STITCH LENGTH
4
5
6
MEDIUM SPEED 1
STRAIGHT LINE ENTRY
2732
HALT
END
CLEAR
READ
PATTERN NO.
7
8
9
MEDIUM SPEED 2
2732 A
NON-STITCH FEED
2ND HOME POSITION
0
LOW SPEED
1 STITCH ERASE
11
12
12a
12b
10
13

Fig.11

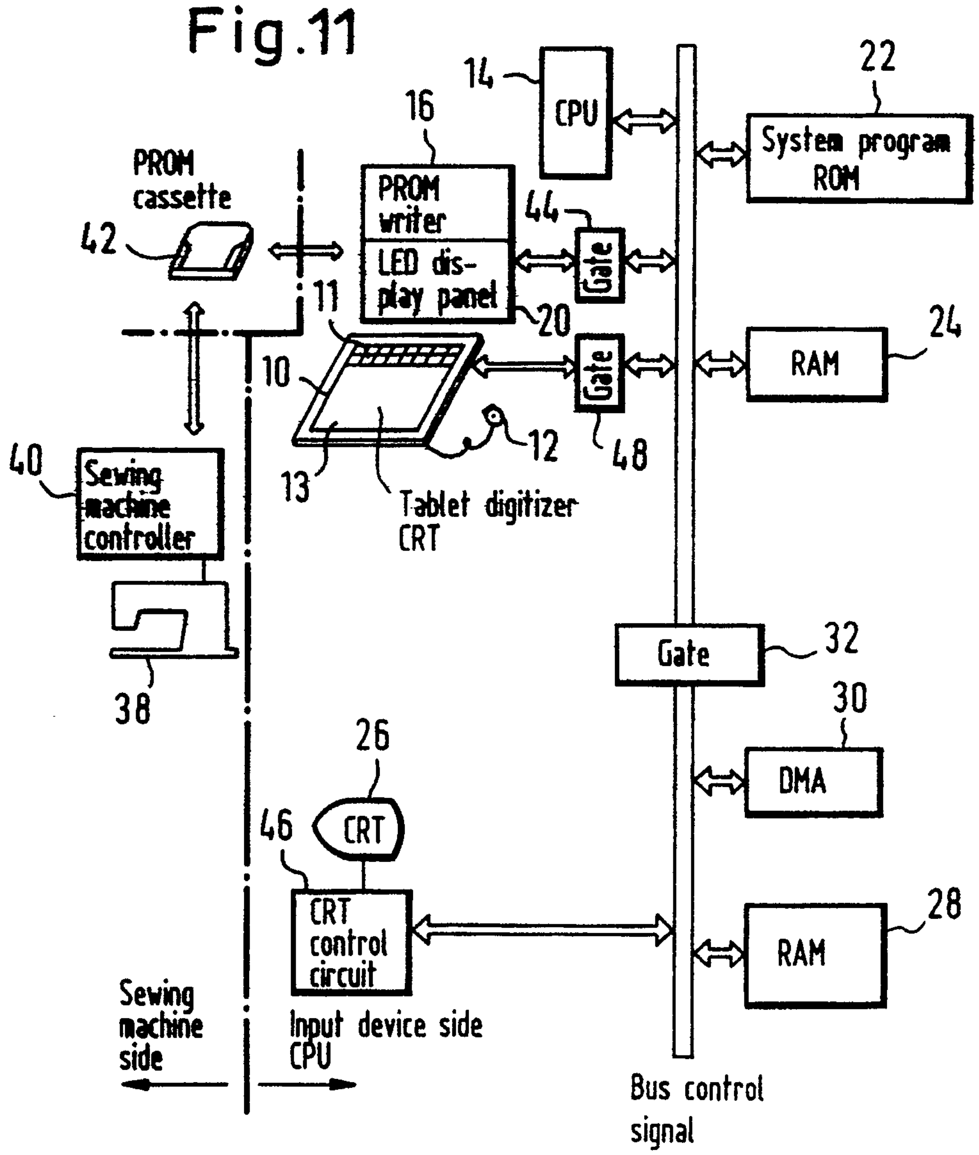
14
CPU
16
22
System program ROM
PROM cassette
PROM writer
44
42
LED dis-play panel
Gate
11
20
24
RAM
10
Gate
12
48
13
Tablet digitizer CRT
40
Sewing machine controller
Gate
32
38
30
DMA
26
46
CRT
CRT control circuit
28
RAM
Sewing machine side
Input device side CPU
Bus control signal

Fig.12

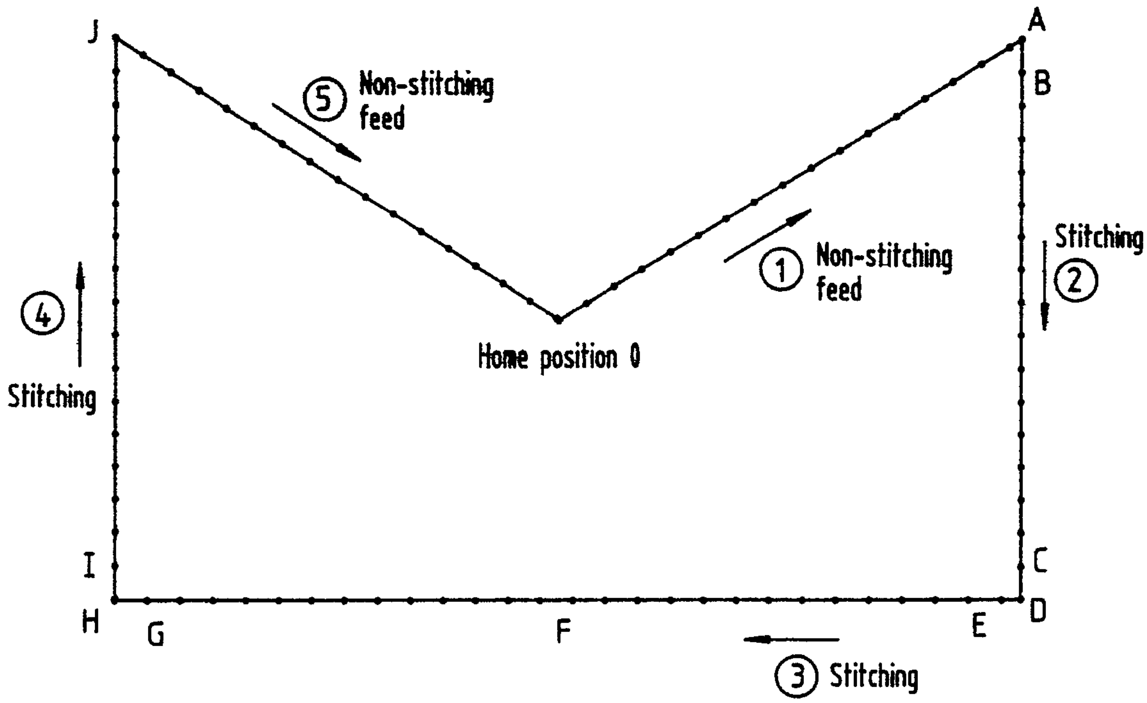
J
A
B
⑤ Non-stitching feed
① Non-stitching feed
Stitching ②
④
Stitching
Home position 0
I
C
H
G
F
E
D
③ Stitching

Fig.13

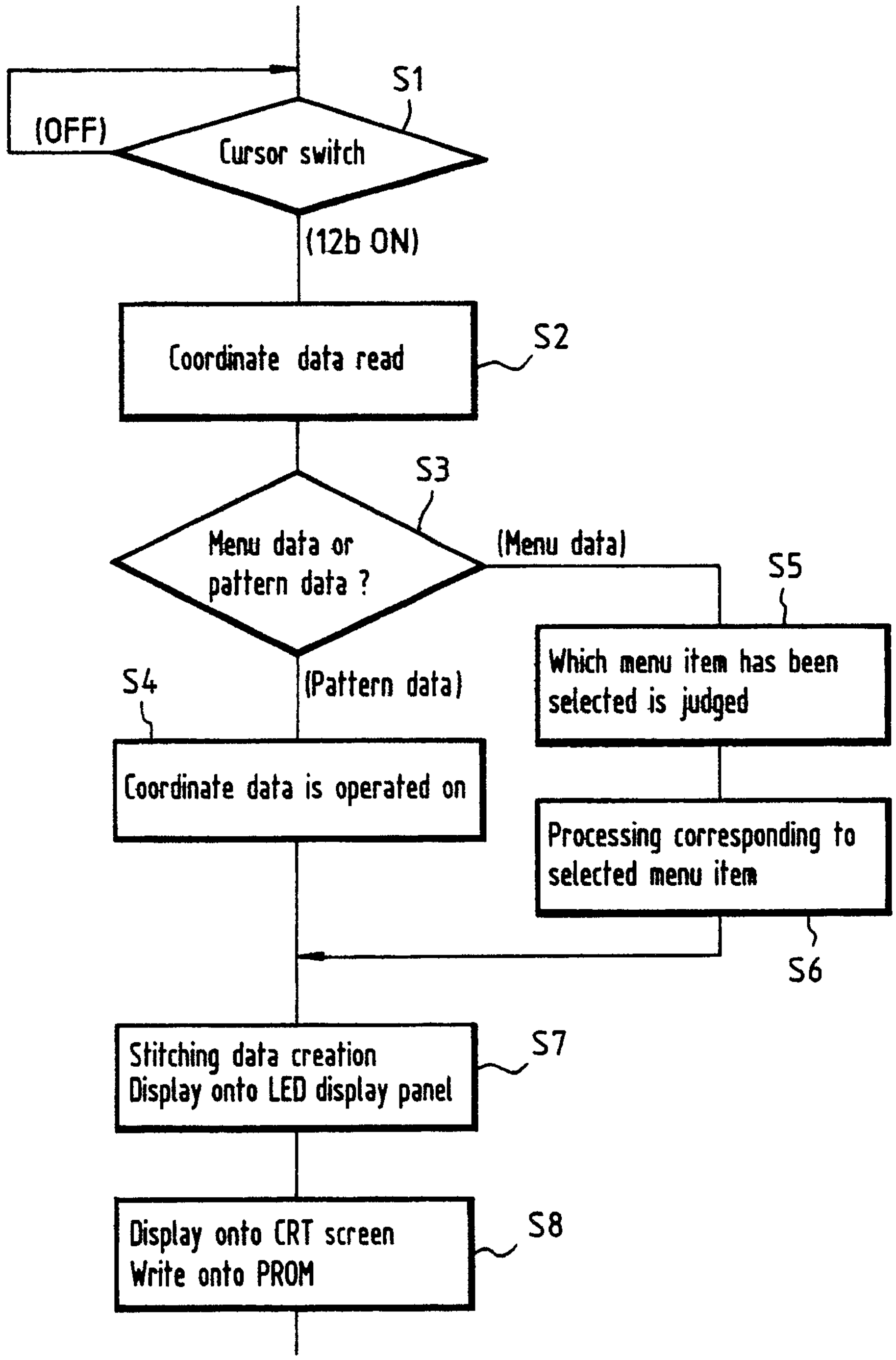
S1
(OFF)
Cursor switch
(12b ON)
Coordinate data read
S2
S3
Menu data or pattern data ?
(Menu data)
S5
Which menu item has been selected is judged
S4
(Pattern data)
Coordinate data is operated on
Processing corresponding to selected menu item
S6
Stitching data creation
Display onto LED display panel
S7
Display onto CRT screen
Write onto PROM
S8